# EUROPÄISCHE PATENTSCHRIFT

(11) **EP 2 915 153 B1**
(45) Veröffentlichungstag und Bekanntmachung des Hinweises auf die Patenterteilung: **01.02.2017**
(21) Anmeldenummer: 13780138.7
(22) Anmeldetag: 23.10.2013
(51) Int. Cl.: G08G 1/0962, G01C 21/36

(54) **FAHRZEUGASSISTENZVORRICHTUNG**
VEHICLE ASSISTANCE DEVICE
SYSTÈME D'ASSISTANCE À LA CONDUITE

(30) Priorität: 31.10.2012 DE 102012219927
(43) Veröffentlichungstag der Anmeldung: 09.09.2015
(73) Patentinhaber: Bayerische Motoren Werke Aktiengesellschaft, 80809 München (DE)
(72) Erfinder: RÖLLE, Christopher, 82194 Gröbenzell (DE); STRASSBERGER, Markus, 85456 Wartenberg (DE)
(86) Internationale Anmeldenummer: PCT/EP2013/072144
(87) Internationale Veröffentlichungsnummer: WO 2014/067825

(56) Entgegenhaltungen:
- EP-A1- 2 461 136
- DE-A1-102009 011 014
- JP-A- 2007 155 404

## Beschreibung

Die Erfindung betrifft eine Fahrzeugassistenzvorrichtung zur Unterstützung eines Fahrers während einer Fahrt mit einem Fahrzeug. Des Weiteren betrifft die Erfindung ein Fahrzeug mit einer derartigen Fahrzeugassistenzvorrichtung.

Derzeitige Navigationssysteme können einen Fahrer mit einer Routenvorschau, die die voraussichtliche Reisezeit und ein prognostiziertes Verkehrsaufkommen berücksichtigt, unterstützen. Wenn der Fahrer in dem Navigationssystem eines Fahrzeugs beispielsweise einen Zielort angibt, wird ein Ausschnitt der Route auf einem Bildschirm des Navigationssystems dargestellt. Neben dem Straßennetz werden insbesondere Geschwindigkeitsbeschränkungen oder prognostizierte Verkehrsstaus angezeigt. Des Weiteren kann die geschätzte Reisezeit durch Anzeige der voraussichtlichen Ankunftszeit am Zielort angezeigt werden.

In der Druckschrift EP 2 461 136 A1 ist eine Navigationsvorrichtung angegeben, bei der ein Nutzer einen Reise-/Fahrplan mit gewünschten Unterbrechungen und Zeitangaben erstellen kann. Die Navigationsvorrichtung stellt die gewünschten Unterbrechungen/Zwischenaufenthalte mit den entsprechenden Zeiten auf einem Bildschirm entlang einer angezeigten Fahrroute grafisch dar, wenn die von dem Nutzer gemachten Orts- und Zeitvorgaben entlang der Fahrtstrecke eingehalten werden können.

Die Aufgabe der Erfindung ist es, eine Fahrzeugassistenzvorrichtung anzugeben, die den Fahrer beim Fahren einer Route Informationen bereitstellt, so dass auf zusätzliche Informationsquellen weitgehend verzichtet werden kann. Eine weitere Aufgabe der Erfindung ist es, ein Fahrzeug mit einer derartigen Fahrzeugassistenzvorrichtung anzugeben.

Eine mögliche Ausführungsform einer Fahrzeugassistenzvorrichtung ist im Patentanspruch 1 angegeben. Die Fahrzeugassistenzvorrichtung umfasst eine Steuereinrichtung zum Erzeugen von Daten, die Informationen bezüglich des zeitlichen Auftretens eines Ereignisses entlang einer Fahrstrecke eines Fahrzeugs angeben, und eine Anzeigeeinrichtung zum Anzeigen einer Abbildung der Fahrstrecke zwischen einem Startpunkt und einem Zielpunkt der Fahrstrecke. Die Steuereinrichtung steuert die Anzeigeeinrichtung mit den Daten an. Die Steuereinrichtung erzeugt die Daten derart, dass die das Auftreten eines Ereignisses kennzeichnende Information in Abhängigkeit von dem Zeitpunkt des Eintretens des Ereignisses auf der Anzeigeeinrichtung entlang der Abbildung der Fahrstrecke angezeigt wird.

Die Fahrzeugassistenzvorrichtung stellt somit einem Fahrer eine schematisierte Darstellung von Informationen, die Ereignisse betreffen, von denen die Steuereinrichtung schätzt, dass sie während der Fahrt zu einer bestimmten Zeit eintreten werden, bereit. Die Informationen über die Ereignisse können auf der Anzeigeeinrichtung in einer zeitlichen Reihenfolge ihres wahrscheinlichen Eintretens entlang einer Abbildung der Fahrstrecke angezeigt und mit Zeitstempeln versehen werden.

Zu den Ereignissen gehören beispielsweise die Ankunft oder zumindest das Vorbeifahren an bestimmten Orten zu einer geschätzten Zeit, das Auftreten von bestimmten Verkehrszuständen, das Eintreten von Witterungsverhältnissen zu einem geschätzten Zeitpunkt entlang der Fahrstrecke, das Eintreten von bestimmten Zuständen des Fahrzeugs entlang der Fahrstrecke, das Vorbeifahren an entlang der Fahrstrecke liegenden Objekten/Einrichtungen, das Gültigwerden von bestimmten Verkehrsregeln entlang der Strecke und/oder die Verfügbarkeit oder die Nichtverfügbarkeit von Kommunikationsdienstanbietern sowie Radio- und Fernsehprogrammanbietern.

Die Steuereinrichtung kann als ein Ziele-/Routenschätzer ausgebildet sein, der ein Fahrziel und die wahrscheinliche Fahrroute auf Basis von verfügbaren historischen Informationen über den Fahrer schätzen kann. Auf Basis dieses Ziele-/Routenschätzers können Informationen, die für einen Fahrer auf seiner Fahrt von Belang sein können, auf der Anzeigeeinrichtung angezeigt werden. Die Fahrzeugassistenzvorrichtung umfaßt erfindungsgemäß eine Identifizierungseinrichtung zum Erkennen des Fahrers beziehungsweise von weiteren Insassen des Fahrzeugs. Aus der Vielzahl von möglichen Informationen, die entlang einer Fahrstrecke angezeigt werden können, kann die Steuereinrichtung eine individuelle, kontextadaptive Filterung unter Berücksichtigung des Fahrzeugzustands, von Umweltparametern und von Fahrgewohnheiten/Vorlieben des identifizierten Fahrers beziehungsweise der im Fahrzeug identifizierten weiteren Fahrzeuginsassen durchführen.

Die möglichen auf der Anzeigeeinrichtung angezeigten Informationen können unter anderem Reisezeiten für verschiedene Routenabschnitte, einen Zeitverlust oder verzögerte Ankunftszeiten gegenüber "üblichen" Ankunftszeiten oder Termineinträge aus verfügbaren Kalendern, beispielsweise eines Smartphones, enthalten. In Abhängigkeit von den verschiedenen Terminen an unterschiedlichen Orten können diese als Routenzwischenziele entlang der Abbildung der Fahrstrecke auf der Anzeigeeinrichtung angezeigt werden. Darüber hinaus können beispielsweise weitergehende Details zu Termineinträgen, insbesondere ein Teilnehmerkreis, ein Ort oder eine Anfangs- und Endzeit angezeigt werden. Des Weiteren können verschiedene Parkmöglichkeiten entlang der Strecke sowie Details der Parkmöglichkeiten, insbesondere Auslastung, Kosten, Zeitverlust, Sicherheitseinrichtungen und Empfehlungen/Bewertungen durch andere Kunden auf der Anzeigeeinrichtung angezeigt werden.

Gemäß einer weiteren Ausführungsform kann das Auftreten einer bestimmten Wettersituation, Niederschlagsintensitäten, Hinweise auf Schneekettenpflicht, Hinweise auf eventuell fehlende Schneeketten im Fahrzeug, Informationen bezüglich Mautstationen, insbesondere Preise, Bezahlmöglichkeiten, wahrscheinliche Wartezeiten oder geöffnete Spuren, prognostizierte Pausenstellen/-zeiten, Reichweitenbegrenzungen in Bezug auf den vorhandenen Kraftstoffvorrat und die voraussichtliche Ankunft an einer letztmöglichen Tankstelle in einem aktuellen Land oder beispielsweise vor einer Autobahn angezeigt werden. Darüber hinaus können Ereignisse, die von Sensoreinrichtungen des Fahrzeugs ermittelt werden, beispielsweise ein zur Neige gehender Wischwasservorrat, sowie eine nächstgelegene Möglichkeit zum Auffüllen des Wischwassers oder Distanzpunkte für Wartungsintervalle angezeigt werden.

In Abhängigkeit von den im Fahrzeug befindlichen Personen können beispielsweise erlernte Umsteigepunkte von Fahrgemeinschaften oder Umsteigepunkte zum öffentlichen Personennahverkehr, beispielsweise Park-and-Ride-Plätze, Orte, an denen sich Freunde oder Bekannte aufhalten, beispielsweise Rastanlagen, Orte, an denen ein Fahrer üblicherweise gelegentlich anhält, vergleichbare Orte der gleichen Kategorie, an denen ein Fahrer üblicherweise anhält, sowie Details zu diesen Orten oder Orte, die von Freunden empfohlen worden sind, auf der Anzeigeeinrichtung angezeigt werden. Des Weiteren können die Positionen von Fahrzeugen, in denen sich Freunde oder Bekannte des Fahrers befinden, angezeigt werden, was beispielsweise auf einer gemeinsamen Urlaubsfahrt von Vorteil sein kann. Wenn von der Identifizierungseinrichtung neben dem Fahrer weitere Personen im Fahrzeug erkannt worden sind, können Informationen entlang der Route, die die spezifischen Interessen der weiteren Insassen berücksichtigen, angezeigt werden. Wenn beispielsweise festgestellt wird, dass sich ein Kleinkind im Fahrzeug befindet, können am Ziel einer Route nur solche Parkmöglichkeiten, die einen barrierefreien Zugang ermöglichen, angezeigt werden.

Des Weiteren kann entlang der Abbildung einer Fahrstrecke auf der Anzeigeeinrichtung das Gültigwerden von Verkehrsregeln angezeigt werden. Bei einem Grenzübertritt können beispielsweise länderspezifische Details zu Verkehrsregeln, Informationen bezüglich zulässiger Anhängerlasten, Versicherungsscheinen, Warnwestenpflicht, Mautpflicht, Spritsorte des Fahrzeugs in der Landessprache oder besondere Geschwindigkeitsbeschränkungen, Halteeinschränkungen oder Parkeinschränkungen angezeigt werden. Des Weiteren können entlang der abgebildeten Fahrstrecke Bereiche angezeigt werden, in denen ein bestimmter Dienst nicht verfügbar ist. Dies kann ein Kommunikationsdienstanbieter, beispielsweise ein Mobilfunkanbieter, oder ein Radio-/Fernsehprogrammanbieter sein. Darüber hinaus können Bereiche, für die beispielsweise keine Wettervorhersage oder Verkehrszustandsvorhersage bereitgestellt worden ist, angezeigt werden.

Gemäß einer weiteren Ausführungsform können Einrichtungen Informationen unmittelbar an die Fahrzeugassistenzvorrichtung oder an eine Zentrale, beispielsweise ein Backend des Fahrzeugherstellers, liefern. Die Informationen können anschließend von der Zentrale an die Fahrzeugassistenzvorrichtung übertragen werden. Die Informationen können beispielsweise einen Zustand der Einrichtung kennzeichnen. Wenn die Einrichtung ein Taxistand oder eine Mietwagenzentrale ist, können auf der Anzeigeeinrichtung Informationen zur Verfügbarkeit, zu Wartezeiten, zu prognostizierten Preisen oder zu Vorreservierungen angezeigt werden. Wenn die Einrichtung ein Flughafen ist, können beispielsweise Abflugzeiten gebuchter Flüge oder Standorte von mobilen Check-In-Schaltern angezeigt werden.

Die Erfindung wird im Folgenden anhand von Figuren, die Ausführungsbeispiele der vorliegenden Erfindung zeigen, näher erläutert. Es zeigen:
- Figur 1: eine Ausführungsform einer Fahrassistenzvorrichtung zur Anzeige von Informationen entlang einer Abbildung einer Fahrstrecke,
- Figur 2: eine weitere Ausführungsform einer Fahrassistenzvorrichtung zur Anzeige von Informationen entlang einer Abbildung einer Fahrstrecke,
- Figur 3: eine Abbildung einer Fahrstrecke mit Informationen bezüglich des Auftretens von Ereignissen entlang einer Fahrstrecke.

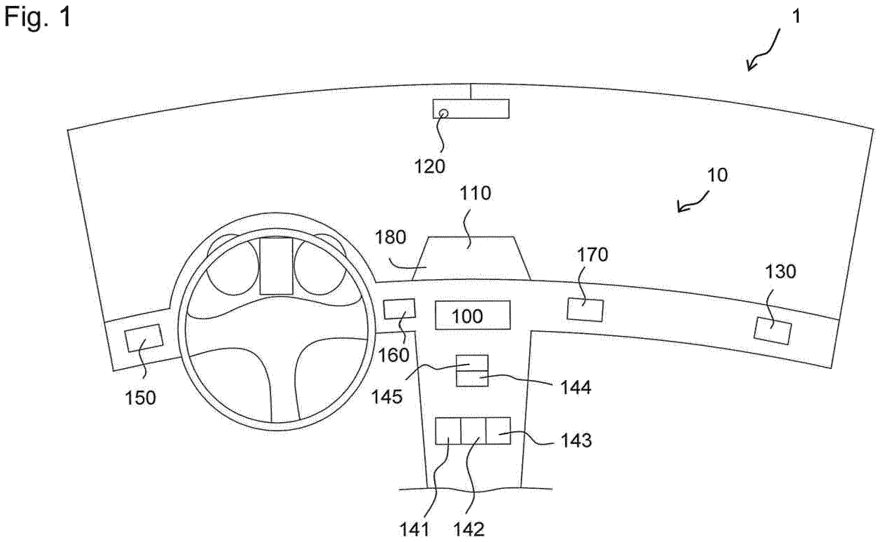

Figur 1 zeigt eine Ausführungsform einer Fahrassistenzvorrichtung 10 zur Anzeige von Informationen entlang einer Abbildung einer Fahrstrecke, die in einem Fahrzeug 1 eingebaut ist. Die Fahrassistenzvorrichtung umfasst eine Steuereinrichtung 100 zum Erzeugen von Daten, die Informationen bezüglich des zeitlichen Auftretens eines Ereignisses entlang der Fahrstrecke angeben. Des Weiteren umfasst die Fahrassistenzvorrichtung 10 eine Anzeigeeinrichtung 110 zum Anzeigen einer Abbildung einer Fahrstrecke des Fahrzeugs 1 zwischen einem Startpunkt und einem Zielpunkt der Fahrstrecke. Die Steuereinrichtung 100 steuert die Anzeigeeinrichtung 110 mit den erzeugten Daten an. Die Steuereinrichtung 100 erzeugt die Daten derart, dass die das Auftreten eines Ereignisses kennzeichnenden Informationen in Abhängigkeit von dem Zeitpunkt des Eintretens des Ereignisses auf der Anzeigeeinrichtung 110 entlang der Abbildung der Fahrstrecke angezeigt werden.

Die angezeigten Informationen können einen gemeldeten Verkehrszustand entlang der Fahrstrecke und/oder einen gemeldeten Wetterzustand entlang der Fahrstrecke und/oder einen festgestellten Zustand des Fahrzeugs entlang der Fahrstrecke und/oder entlang der Fahrstrecke liegende Einrichtungen oder Objekte und/oder entlang der Fahrstrecke auftretende Ereignisse und/oder entlang der Fahrstrecke gültige Verkehrsregeln und/oder die Verfügbarkeit von Kommunikationsdienst-, Radio- und Fernsehanbietern entlang der Fahrstrecke betreffen.

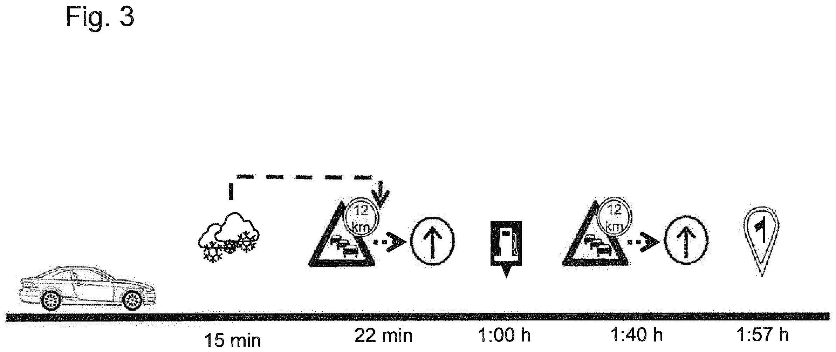

Die Steuereinrichtung ist dazu ausgebildet, die Informationen auf der Anzeigeeinrichtung 110 in einer zeitlichen Reihenfolge entlang der Abbildung der Fahrstrecke anzuzeigen. Das Auftreten der prognostizierten Ereignisse während der Fahrt kann mit einem Zeitstempel versehen sein. Figur 3 zeigt beispielhaft eine auf der Anzeigeeinrichtung 110 angezeigte Fahrstrecke zwischen einem Startpunkt und einem Zielpunkt, auf der unterschiedliche Ereignisse zu erwarten sind. Im Beispiel der Figur 3 ist beispielsweise 15 Minuten nach Verlassen des Standortes laut den zur Verfügung stehenden Wetterinformationen Schneefall zu erwarten. Aufgrund des Schneefalls kommt es nach etwa 22 Minuten zu zähfließendem Verkehr oder Stau auf einer Länge von ca. 12 km. Nach ca. 1 Stunde ist geschätzt, dass der Tankinhalt allmählich zur Neige gehen wird. Nach 1 Stunde und 40 Minuten ist mit einem Verkehrsstau oder zumindest zäh fließendem Verkehr auf einer Länge von 12 km zu rechnen. Die Ankunft am Zielort wird voraussichtlich nach 1 Stunde und 57 Minuten zu erwarten.

Die Fahrzeugassistenzvorrichtung 10 kann eine Identifizierungseinrichtung 120 zum Identifizieren von mindestens einem Insassen des Fahrzeugs umfassen. Die Steuereinrichtung 100 kann dazu ausgebildet sein, die Daten in Abhängigkeit von dem ermittelten Insassen des Fahrzeugs zu erzeugen. Dadurch wird es ermöglicht, individuell für jeden Fahrer oder Fahrzeuginsassen diejenigen Informationen auf der Anzeigeeinrichtung anzuzeigen, die für den jeweiligen Fahrer oder Fahrzeuginsassen von Interesse sind. Jedem Fahrzeuginsassen sind somit spezifische Informationen zugeordnet, die auf der Anzeigeeinrichtung angezeigt werden können. Die Steuereinrichtung kann insbesondere dazu ausgebildet sein, die Informationen der verschiedenen Fahrzeuginsassen zu kombinieren und dabei entstehende Interessenskonflikte aufzulösen.

Die Fahrzeugassistenzvorrichtung 10 kann eine Empfangseinrichtung 130 zum Empfangen eines ersten Datensatzes umfassen. Die Steuereinrichtung 100 kann dazu ausgebildet sein, aus dem ersten Datensatzmindestens einen ersten Teil der Daten zu erzeugen und die dazugehörigen Informationen auf der Anzeigeeinrichtung 110 entlang der Abbildung der Fahrstrecke anzuzeigen. Die Fahrzeugassistenzvorrichtung 10 kann die auf der Anzeigeeinrichtung 110 angezeigten Informationen als Datensatz beispielsweise von einer Zentrale, beispielsweise einem Backend des Fahrzeugherstellers, oder unmittelbar von diversen Einrichtungen erhalten, wenn der empfangene Datensatz Informationen zu der sendenden Einrichtung enthält.

Die Fahrzeugassistenzvorrichtung 10 kann eine Speichereinrichtung 140 mit einem Speicher 141 zum Speichern des empfangenen ersten Datensatzes umfassen. Die Steuereinrichtung 100 kann in Abhängigkeit von dem identifizierten Insassen des Fahrzeugs, insbesondere des Fahrers, mindestens einen Teil des Datensatzes, der den speziellen Fahrer betreffende Informationen enthält, auswählen und daraus die Daten, die die Informationen angeben, erzeugen.

Die Fahrzeugassistenzvorrichtung 10 kann des Weiteren eine Sensoreinrichtung 150 zum Feststellen eines Zustands des Fahrzeugs aufweisen. Die Sensoreinrichtung 150 erzeugt in Abhängigkeit von dem festgestellten Zustand des Fahrzeugs einen zweiten Datensatz. Die Speichereinrichtung 140 kann einen zweiten Speicher 142 zum Speichern des zweiten Datensatzes umfassen. Die Steuereinrichtung 100 ist dazu ausgebildet, in Abhängigkeit von dem festgestellten Zustand des Fahrzeugs mindestens einen Teil des zweiten Datensatzes auszuwählen und aus dem ausgewählten Teil des zweiten Datensatzes Daten, die die darzustellenden Informationen angeben, zu erzeugen.

Somit können entlang der Abbildung der Fahrstrecke neben den von externen Einrichtungen bereitgestellten Informationen auch solche Informationen angezeigt werden, die Daten betref-fen, die von fahrzeugeigenen Sensoren erfasst worden sind. Bei der in Figur 3 abgebildeten Fahrstrecke wird beispielsweise nach ca. 1 Stunde ein "Zapfsäulen-Symbol" angezeigt, da ein Tankfüllstandssensor der Sensoreinrichtung ermittelt hat, dass der im Tank noch vorhandene Sprit nach ca. einer Stunde zur Neige gehen wird.

Die Fahrzeugassistenzvorrichtung 10 weist weiter eine Schnittstelleneinrichtung 160 zum Verbinden eines mobilen Multifunktionsgeräts 2 mit der Fahrzeugassistenzvorrichtung 10 auf. Die Speichereinrichtung 140 kann einen dritten Speicher 143 zum Speichern von einem dritten Datensatz aufweisen. Der dritte Datensatz kann von dem mobilen Multifunktionsgerät 2 bereitgestellt werden. Die Steuereinrichtung 110 ist dazu ausgebildet, den dritten Datensatz aus dem mobilen Multifunktionsgerät 2 auszulesen und in dem dritten Speicher 143 zu speichern. Die Steuereinrichtung 100 wählt mindestens einen Teil des dritten Datensatzes in Abhängigkeit von der Fahrstrecke aus und erzeugt aus dem ausgewählten Teil des dritten Datensatzes die Daten, die die Informationen zum Anzeigen auf der Anzeigevorrichtung angeben.

Das mobile Multifunktionsgerät 2 kann beispielsweise ein Smartphone sein. Die Steuereinrichtung kann den dritten Datensatz aus einem Speicher des mobilen Multifunktionsgeräts 2 auslesen. Der Speicher kann beispielsweise Einträge eines Terminkalenders des Fahrers enthalten. Die Steuereinrichtung kann aus den ausgelesen Terminen Daten erzeugen, die beispielsweise Routenzwischenziele angeben, wenn aus dem Terminkalender ersichtlich ist, an welchen Orten die Termine stattfinden. Wenn die Orte, an denen die Termine stattfinden, entlang der Fahrroute liegen, können sie als mögliche Zwischenziele dem Fahrer angezeigt werden.

Gemäß einer weiteren möglichen Ausführungsform kann die Steuereinrichtung 100 programmierbar ausgebildet sein. Die Steuereinrichtung 100 kann die Daten, die die anzuzeigenden Informationen angeben, in Abhängigkeit von der Programmierung erzeugen. Somit ermöglicht die Fahrzeugassistenzvorrichtung 10 die Art der anzuzeigenden Informationen an die individuellen Bedürfnisse eines Fahrzeuginsassen anzupassen. Dadurch können einzelne Regeln beziehungsweise Kategorien, die anzuzeigende Informationen betreffen, programmiert werden. Beispielsweise kann ein Fahrer durch die Programmierung festlegen, ob er sich entlang einer Route Informationen zu Parkmöglichkeiten, Rastplätzen oder Park-and-Ride-Parkplätzen mit angeschlossenem öffentlichem Personennahverkehr anzeigen lassen will.

Des Weiteren kann die Steuereinrichtung 110 derart programmiert werden, dass die Programmierung eine Filterung der anzuzeigen Informationen ermöglicht. Wenn beispielsweise die Menge an möglichen Objekten, die entlang der Abbildung der Fahrstrecke von der Steuereinrichtung dargestellt werden können eine definierte Anzahl übersteigt, kann die Steuereinrichtung derart programmiert werden, dass bestimmte Objekte, Zustände oder Ereignisse nicht auf der Anzeigeeinrichtung dargestellt werden. Den programmierten Regeln, die die anzuzeigenden Informationen definieren, können beispielsweise Prioritäten zugewiesen werden. Des Weiteren kann die Auswahl der angezeigten Informationen in Abhängigkeit vom aktuellen Kontext beziehungsweise der aktuellen Fahrtsituation, beispielsweise einem Stehen oder Fahren des Fahrzeugs, dem Fahren mit einer bestimmten Geschwindigkeit oder der Komplexität einer Fahrtsituation festgelegt werden. Darüber hinaus kann ein Detaillierungsgrad, mit dem Informationen auf der Anzeigeeinrichtung angezeigt werden, durch entsprechende Programmierung der Steuereinrichtung 110 festgelegt werden.

Gemäß einer weiteren Ausführungsform umfasst die Fahrzeugassistenzvorrichtung 10 eine Eingabeeinrichtung 180 zum Eingeben eines Fahrzwecks. Die Steuereinrichtung 100 ist dazu ausgebildet, die Daten, die die auf der Anzeigeeinrichtung anzuzeigenden Informationen definieren, in Abhängigkeit von dem eingegebenen Fahrzweck zu erzeugen. Dadurch können die anzuzeigenden Informationen in verschiedene Kontextgruppen, beispielsweise Fahrt zur Arbeit, Urlaubsfahrt oder Einkaufsfahrt eingeteilt werden. In Abhängigkeit von dem eingegebenen Fahrzweck können somit für die gleiche Fahrstrecke in Abhängigkeit vom Zweck der Fahrt verschiedene Informationen angezeigt werden. Dabei können dem Fahrer zeitgleich oder parallel mehrere individuelle Ansichten der abgebildeten Fahrstrecke und der angezeigten Informationen zur Verfügung stehen, wobei ein einfacher Wechsel zwischen den verschiedenen Ansichten möglich ist. Beispielsweise kann ein Fahrzeugsymbol entlang der angezeigten Fahrstrecke verschoben werden, wodurch eine Vorausschau auf die weitere Streckenführung möglich ist.

Gemäß einer weiteren möglichen Ausführungsform kann ein auslösender Trigger, der angibt, warum eine Information entlang der abgebildeten Fahrstrecke angezeigt wird, auf der Anzeigeeinrichtung 110 dargestellt werden. Wenn die Steuereinrichtung 110 feststellt, dass das Fahrzeug an einem bestimmten Wochentag zu einer bestimmten Uhrzeit, beispielsweise am Montag morgen gegen 8:00 Uhr, bewegt wird und die Identifizierungseinrichtung 120 ein Kind auf dem Rücksitz des Fahrzeugs identifiziert hat, wird auf der Anzeigeeinrichtung eine Fahrstrecke zwischen dem Wohnhaus des Fahrers als Startpunkt und einem Kindergarten als Zielort angezeigt. Wenn die Identifizierungseinrichtung 120 hingegen kein Kind auf dem Rücksitz detektiert hat, wird beispielsweise eine Fahrstrecke zwischen dem Wohnhaus des Fahrers als Startpunkt und einem Arbeitsplatz als Zielort angezeigt.

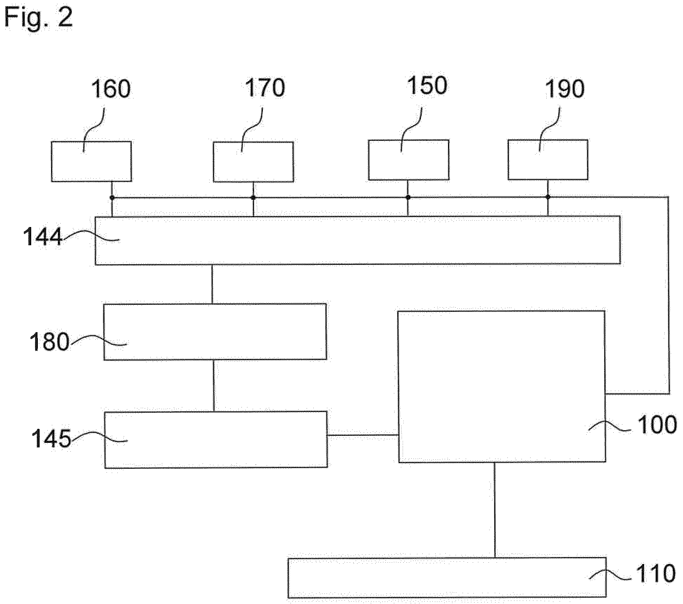

Figur 2 zeigt eine weitere Ausführungsform der Fahrzeugassistenzvorrichtung 10, bei der die Steuereinrichtung 110 aus dem historischen Fahrverhalten Rückschlüsse auf die anzuzeigende Fahrroute und die entlang der Fahrtroute anzuzeigenden Informationen ziehen kann. Die Fahrzeugassistenzvorrichtung 10 umfasst die Steuereinrichtung 110, die Identifizierungseinrichtung 120, die Sensoreinrichtung 150, die Schnittstelleneinrichtung 160, die Positionsermittlungseinrichtung 170 und Interaktionskomponenten 190, beispielsweise einen Blinker. Darüber hinaus umfasst die Fahrzeugassistenzvorrichtung einen Speicher 144 und einen Speicher 145 der Speichereinrichtung 140 zum Speichern von jeweils einer Vielzahl von vierten Datensätzen. Die vierten Datensätze umfassen jeweils eine Position des Fahrzeugs, einen ersten Parameter, der den Insassen des Fahrzeugs kennzeichnet, und einen zweiten Parameter, der eine Aktion des Insassen des Fahrzeugs an der ermittelten Position kennzeichnet. In dem Speicher 144 sind somit für jeden Fahrer eine Vielzahl von Aktionen und Fahrsituationen gespeichert.

Die Fahrzeugassistenzvorrichtung umfasst des Weiteren eine Auswerteeinrichtung 180 zum Auswerten des Speichers 144 derart, dass die Auswerteeinrichtung 180 den vierten Datensatz in dem Speicher 145 speichert in Abhängigkeit von der Häufigkeit des Speicherns des vierten Datensatzes in dem Speicher 144. Wenn die Auswerteeinrichtung 180 somit feststellt, dass der durch den ersten Parameter gekennzeichnete Fahrer mit dem von der Identifizierungseinrichtung 120 ermittelten Fahrer übereinstimmt und die in dem vierten Datensatz enthaltene Position entlang der Fahrstrecke des Fahrzeugs liegt, liest die Steuereinrichtung 100 den vierten Datensatz aus dem Speicher 145 aus. Die Steuereinrichtung erzeugt die Daten, die die anzuzeigenden Informationen definieren, in Abhängigkeit von dem aus dem Speicher 145 ausgelesenen Datensatz. Die Steuereinrichtung 100 kann somit für einen Fahrer individuelle Informationen als auch für jeden Fahrer allgemeingültige Informationen entlang der abgebildeten Fahrstrecke auf der Anzeigeeinrichtung darstellen.

Gemäß einer weiteren Ausführungsform können einem entlang der abgebildeten Fahrstrecke angezeigten Objekt weitere Aktionen zugeordnet sein. Beispielsweise besteht die Möglichkeit des Kontaktierens eines Händlers, einer Hotline oder einer Werkstatt. Zu einem angezeigten Objekt können Detailinformationen angezeigt werden. Wenn ein Unternehmen des öffentlichen Personennahverkehrs auf der Anzeigeeinrichtung entlang der abgebildeten Fahrstrecke angezeigt wird, besteht beispielsweise die Möglichkeit durch Anklicken des Symbols ein Ticket zu lösen. Wenn entlang der Fahrstrecke der Ort, an dem eine Konferenz abgehalten werden soll, angezeigt wird, kann diesem Objekt als weitergehende Aktion zugeordnet werden, eine Nachricht an einen Konferenzteilnehmer zu senden oder den Konferenzpartner zu kontaktieren. Des Weiteren kann, falls eine Mautstelle entlang der abgebildeten Fahrstrecke angezeigt wird, zusätzlich angeboten werden, Mautgebühren elektronisch mittels der Fahrzeugassistenzvorrichtung zu zahlen. Des Weiteren kann in einem angezeigten Parkhaus als zusätzliche Option angeboten werden, ein Parkplatz vorzureservieren.

Gemäß einer weiteren Ausgestaltungsform können definierte Ereignisse einer Fahrt für eine spätere Nachbetrachtung beziehungsweise Bearbeitung festgehalten werden. Ereignisse können hierbei beliebige logische Verknüpfungen, insbesondere der folgenden Inhalte sein: spezielle Konstellation von Fahrzeugdaten, beispielsweise zur Nachbetrachtung einer Fahrzeugfahrt, Anhalten an speziellen Orten, Erreichen eines bestimmten Punktestands in einem Spiel, eingegangene Anrufe, verpasste Anrufe, Eingang neuer Nachrichten, beispielsweise über E-Mail, Twitter, Facebook oder Skype, ein Unfall oder ein manuell getriggertes Ereignis.

Eine weitere Möglichkeit besteht darin, die festgehaltenen Ereignisse mit einer Auswahl zugeordneter Aktionen zu koppeln. Beispielsweise können bestimmte Ereignisse in ein Netzwerk, zum Beispiel Facebook, eingespeist werden. Des Weiteren können neue Positionen, die für den Fahrer von besonderem Interesse sind, erstellt und bewertet werden. Ein Unfallbericht kann eingesehen, die Daten des Unfallgegners können abgerufen werden und bestimmte Personen oder Einrichtungen können in diesem Zusammenhang kontaktiert werden. Des Weiteren können ein verpasster Anruf angerufen und Nachrichten abgerufen werden.

Die Fahrzeugassistenzvorrichtung stellt für einen Fahrer beziehungsweise einen beliebigen Fahrzeuginsassen eine zentrale Informationsstelle für alle bekannten, interessierenden Belange, die während der Fahrt beziehungsweise für die nächsten anstehenden Fahrten zu erwarten sind, dar. Durch die Anpassung an individuelle Verhaltensweisen und Bedürfnisse kann eine zunächst große Zahl an möglichen Informationsobjekten signifikant reduziert werden.

### Bezugszeichenliste

- 1: Fahrzeug
- 2: mobiles Multifunktionsgerät
- 10: Fahrzeugassistenzvorrichtung
- 100: Steuereinrichtung
- 110: Anzeigeeinrichtung
- 120: Identifizierungseinrichtung
- 130: Empfangseinrichtung
- 140: Speichereinrichtung
- 150: Sensoreinrichtung
- 160: Schnittstelleneinrichtung
- 170: Positionsermittlungseinrichtung
- 180: Auswerteeinrichtung

## Patentansprüche

1. Fahrzeugassistenzvorrichtung, umfassend:
- eine Steuereinrichtung (100) zum Erzeugen von Daten, die Informationen bezüglich des zeitlichen Auftretens eines Ereignisses entlang einer Fahrstrecke eines Fahrzeugs (1) angeben,
- eine Anzeigeeinrichtung (110) zum Anzeigen einer Abbildung der Fahrstrecke des Fahrzeugs (1) zwischen einem Startpunkt und einem Zielpunkt der Fahrstrecke,
- wobei die Steuereinrichtung (100) die Anzeigeeinrichtung (110) mit den Daten ansteuert,
- wobei die Steuereinrichtung (100) die Daten derart erzeugt, dass die das Auftreten eines Ereignisses kennzeichnende Information in Abhängigkeit von dem Zeitpunkt des Eintretens des Ereignisses auf der Anzeigeeinrichtung (110) entlang der Abbildung der Fahrstrecke angezeigt wird,
**dadurch gekennzeichnet, dass** die Fahrzeugassistenzvorrichtung (10) eine Identifizierungseinrichtung (120) zum Identifizieren von mindestens einem Insassen des Fahrzeugs umfasst, und die Steuereinrichtung (100) dazu ausgebildet ist, die Daten in Abhängigkeit von dem ermittelten Insassen des Fahrzeugs zu erzeugen.

2. Fahrzeugassistenzvorrichtung nach Anspruch 1,
wobei die Steuereinrichtung (100) dazu ausgebildet ist, in Abhängigkeit von einem Zustand des Fahrzeugs und/oder einem Verkehrszustand auf der Fahrstrecke und/oder in Abhängigkeit von einem Wetterzustand entlang der Fahrstrecke die Daten zu erzeugen.

3. Fahrzeugassistenzvorrichtung nach einem der Ansprüche 1 oder 2,
wobei die Informationen einen gemeldeten Verkehrszustand entlang der Fahrstrecke und/oder einen gemeldeten Wetterzustand entlang der Fahrstrecke und/oder einen festgestellten Zustand des Fahrzeugs entlang der Fahrstrecke und/oder entlang der Fahrstrecke liegende Objekte und/oder entlang der Fahrstrecke gültige Verkehrsregeln und/oder die Verfügbarkeit von Kommunikationsdienstanbietern, Radio- und Fernsehprogrammanbietern entlang der Fahrstrecke betreffen.

4. Fahrzeugassistenzvorrichtung nach einem der Ansprüche 1 bis 3, umfassend:
- eine Empfangseinrichtung (130) zum Empfangen von einem ersten Datensatz,
- wobei die Steuereinrichtung (100) dazu ausgebildet ist, aus dem ersten Datensatz mindestens einen ersten Teil der Daten zu erzeugen und die dazugehörigen Informationen auf der Anzeigeeinrichtung (110) entlang der Abbildung der Fahrstrecke anzuzeigen.

5. Fahrzeugassistenzvorrichtung nach einem der Ansprüche 1 bis 3, umfassend:
- eine Empfangseinrichtung (130) zum Empfangen von einem ersten Datensatz,
- eine Speichereinrichtung (140) mit einem ersten Speicher (141) zum Speichern des ersten Datensatzes,
- wobei die Steuereinrichtung (100) dazu ausgebildet ist, in Abhängigkeit von dem identifizierten mindestens einen Insassen des Fahrzeugs mindestens einen Teil des ersten Datensatzes auszuwählen und aus dem ausgewählten Teil des ersten Datensatzes die Daten zum Anzeigen auf der Anzeigeeinrichtung (110) zu erzeugen.

6. Fahrzeugassistenzvorrichtung nach einem der Ansprüche 1 bis 5, umfassend:
- mindestens eine Sensoreinrichtung (150) zum Feststellen mindestens eines Zustands des Fahrzeugs (1),
- wobei die Sensoreinrichtung (150) in Abhängigkeit von dem festgestellten Zustand des Fahrzeugs (1) einen zweiten Datensatz erzeugt,
- wobei die Speichereinrichtung (140) einen zweiten Speicher (142) zum Speichern des zweiten Datensatzes umfasst,
- wobei die Steuereinrichtung (100) dazu ausgebildet ist, in Abhängigkeit von dem festgestellten Zustand des Fahrzeugs (1) mindestens einen Teil des zweiten Datensatzes auszuwählen und aus dem ausgewählten Teil des zweiten Datensatzes die Daten zum Anzeigen auf der Anzeigeeinrichtung (110) zu erzeugen.

7. Fahrzeugassistenzvorrichtung nach einem der Ansprüche 1 bis 6, umfassend:
- eine Schnittstelleneinrichtung (160) zum Verbinden eines mobilen Multifunktionsgeräts (2) mit der Fahrzeugassistenzvorrichtung (10),
- wobei die Speichereinrichtung (140) einen dritten Speicher (143) zum Speichern von einem dritten Datensatz aufweist und der dritte Datensatz von dem mobilen Multifunktionsgerät (2) bereitgestellt wird,
- wobei die Steuereinrichtung (100) dazu ausgebildet ist, den dritten Datensatz aus dem mobilen Multifunktionsgerät (2) auszulesen und in dem dritten Speicher (143) der Speichereinrichtung zu speichern,
- wobei die Steuereinrichtung (100) dazu ausgebildet ist, mindestens einen Teil des dritten Datensatzes in Abhängigkeit von der Fahrstrecke auszuwählen und aus dem ausgewählten Teil des dritten Datensatzes die Daten zum Anzeigen auf der Anzeigeeinrichtung (110) zu erzeugen.

8. Fahrzeugassistenzvorrichtung nach Anspruch 7,
wobei das mobile Multifunktionsgerät (2) ein Smartphone ist und die Steuereinrichtung (100) dazu ausgebildet ist, den dritten Datensatz aus einem Speicher des Smartphones zum Speichern von Einträgen eines Terminkalenders des Smartphones auszulesen.

9. Fahrzeugassistenzvorrichtung nach einem der Ansprüche 1 bis 8, umfassend:
- eine Positionsermittlungseinrichtung (170) zum Ermitteln einer Position des Fahrzeugs (1),
- wobei die Speichereinrichtung (140) einen vierten Speicher und einen fünften Speicher (144, 145) zum Speichern von jeweils einer Vielzahl von vierten Datensätzen umfasst, wobei die vierten Datensätze jeweils eine Position des Fahrzeugs, einen ersten Parameter, der den Insassen des Fahrzeugs kennzeichnet, und einen zweiten Parameter, der eine Aktion des Insassen des Fahrzeugs an der Position kennzeichnet, umfassen,
- eine Auswerteeinrichtung (180) zum Auswerten des vierten Speichers (144) derart, dass die Auswerteeinrichtung (180) in Abhängigkeit von der Häufigkeit des Speicherns eines der vierten Datensätze in dem vierten Speicher den vierten Datensatz in dem fünften Speicher (145) speichert.

10. Fahrzeugassistenzvorrichtung nach Anspruch 9,
- wobei die Steuereinrichtung (100) dazu ausgebildet ist, den vierten Datensatz aus dem fünften Speicher (145) auszulesen, wenn die Steuereinrichtung (100) feststellt, dass der durch den ersten Parameter gekennzeichnete Fahrer mit dem von der Identifizierungseinrichtung (120) ermittelten Fahrer übereinstimmt und die in dem vierten Datensatz enthaltene Position entlang der Fahrstrecke des Fahrzeugs liegt,
- wobei die Steuereinrichtung (100) dazu ausgebildet ist, in Abhängigkeit von dem ausgewählten vierten Datensatz die Daten zum Anzeigen auf der Anzeigeeinrichtung (110) zu erzeugen.

11. Fahrzeugsassistenzvorrichtung nach einem der Ansprüche 1 bis 10,
wobei die Steuereinrichtung (100) derart programmierbar ausgebildet ist, dass die Steuereinrichtung (100) die Daten in Abhängigkeit von der Programmierung erzeugt.

12. Fahrzeugassistenzvorrichtung nach einem der Ansprüche 1 bis 11, umfassend:
- eine Eingabeeinrichtung (180) zum Eingeben des Zwecks der Fahrt,
- wobei die Steuereinrichtung (100) dazu ausgebildet ist, die Daten in Abhängigkeit von dem eingegebenen Zweck zu erzeugen und die dazugehörigen Informationen auf der Anzeigeeinrichtung (110) anzuzeigen.

13. Fahrzeug, umfassend:
eine Fahrzeugassistenzvorrichtung (10) nach einem der Ansprüche 1 bis 12.

## Claims

1. A vehicle assistance device, comprising:
- a control means (100) for generating data which provide information concerning the occurrence in time of an event along a route of a vehicle (1),
- a display means (110) for displaying a map of the route of the vehicle (1) between a starting point and a destination point of the route,
- wherein the control means (100) controls the display means (110) with the data,
- wherein the control means (100) generates the data such that the information characterising the occurrence of an event is displayed on the display means (110) along the map of the route subject to the point in time of the occurrence of the event,
**characterised in that** the vehicle assistance device (10) comprises an identification means (120) for identifying at least one occupant of the vehicle, and the control means (100) is configured to generate the data subject to the occupant identified in the vehicle.

2. A vehicle assistance device according to claim 1, wherein the control means (100) is configured to generate the data subject to a state of the vehicle and/or to a traffic situation on the route and/or subject to a weather situation along the route.

3. A vehicle assistance device according to either claim 1 or claim 2, wherein the information relates to a reported traffic situation along the route and/or to a reported weather situation along the route and/or to an established state of the vehicle along the route and/or to objects located along the route and/or to traffic regulations which apply along the route and/or to the availability of communication service providers, radio and television programme providers along the route.

4. A vehicle assistance device according to any one of claims 1 to 3, comprising:
- a receiving means (130) for receiving a first data record,
- wherein the control means (100) is configured to generate at least a first portion of the data from the first data record and to display the associated information on the display means (110) along the map of the route.

5. A vehicle assistance device according to any one of claims 1 to 3, comprising:
- a receiving means (130) for receiving a first data record,
- a storage means (140) having a first memory (141) for storing the first data record,
- wherein the control means (100) is configured to select at least a portion of the first data record subject to the identified at least one occupant of the vehicle and to generate the data for display on the display means (110) from the selected portion of the first data record.

6. A vehicle assistance device according to any one of claims 1 to 5, comprising:
- at least one sensor means (150) for establishing at least one state of the vehicle (1),
- wherein the sensor means (150) generates a second data record subject to the established state of the vehicle (1),
- wherein the storage means (140) comprises a second memory (142) for storing the second data record,
- wherein the control means (100) is configured to select at least a portion of the second data record subject to the established state of the vehicle (1) and to generate the data for display on the display means (110) from the selected portion of the second data record.

7. A vehicle assistance device according to any one of claims 1 to 6, comprising:
- an interface means (160) for connecting a mobile multifunction device (2) to the vehicle assistance device (10),
- wherein the storage means (140) has a third memory (143) for storing a third data record and the third data record is provided by the mobile multifunction device (2),
- wherein the control means (100) is configured to read out the third data record from the mobile multifunction device (2), and to store it in the third memory (143) of the storage means,
- wherein the control means (100) is configured to select at least a portion of the third data record subject to the route and to generate the data for display on the display means (110) from the selected portion of the third data record.

8. A vehicle assistance device according to claim 7, wherein the mobile multifunction device (2) is a smartphone and the control means (100) is configured to read out the third data record from a memory of the smartphone for storing entries of an appointment diary of the smartphone.

9. A vehicle assistance device according to any one of claims 1 to 8, comprising:
- a position determining means (170) for determining a position of the vehicle (1),
- wherein the storage means (140) has a fourth memory and a fifth memory (144, 145) for respectively storing a plurality of fourth data records, wherein the fourth data records respectively comprise a position of the vehicle, a first parameter which characterises the occupant of the vehicle, and a second parameter which characterises an action of the occupant of the vehicle in the position,
- an evaluation means (180) for evaluating the fourth memory (144) such that the evaluation means (180) stores the fourth data record in the fifth memory (145) subject to the frequency of the storage of one of the fourth data records in the fourth memory.

10. A vehicle assistance device according to claim 9,
- wherein the control means (100) is configured to read out the fourth data record from the fifth memory (145) when the control means (100) establishes that the driver, **characterised by** the first parameter, matches the driver determined by the identification means (120), and the position, contained in the fourth data record, is located along the route of the vehicle,
- wherein the control means (100) is configured to generate the data for display on the display means (110) subject to the selected fourth data record.

11. A vehicle assistance device according to any one of claims 1 to 10, wherein the control means (100) is configured in a programmable manner such that the control means (100) generates the data subject to the programming.

12. A vehicle assistance device according to any one of claims 1 to 11, comprising:
- an input means (180) for inputting the purpose of the journey,
- wherein the control means (100) is configured to generate the data subject to the purpose which has been input and to display the associated information on the display means (110).

13. A vehicle, comprising:
a vehicle assistance device (10) according to any one of claims 1 to 12.

## Revendications

1. Dispositif d'assistance à la conduite comprenant :
- un dispositif de commande (100) permettant de générer des données donnant des informations concernant l'apparition au cours du temps d'un évènement le long de l'itinéraire de déplacement d'un véhicule (1),
- un dispositif d'affichage (110) permettant d'afficher une représentation de l'itinéraire de déplacement du véhicule (1) entre un point de départ et un point cible de cette trajectoire,
- le dispositif de commande (100) commandant le dispositif d'affichage (110) avec les données,
- le dispositif de commande (100) générant les données de sorte que l'information caractérisant l'apparition d'un événement soit affichée sur le dispositif d'affichage (110) le long de la représentation de l'itinéraire de déplacement en fonction de l'instant de la manifestation de l'événement,
**caractérisé en ce que**
le dispositif d'assistance à la conduite (10) comprend un dispositif d'identification (120) permettant d'identifier au moins un passager du véhicule et le dispositif de commande (100) est réalisé pour permettre de générer les données en fonction du passage du véhicule détecté.

2. Dispositif d'assistance à la conduite conforme à la revendication 1, dans lequel le dispositif de commande (100) est réalisé pour pouvoir générer les données en fonction de l'état du véhicule et/ou de l'état du trafic sur l'itinéraire de déplacement et/ou en fonction des conditions météorologiques le long de l'itinéraire de déplacement.

3. Dispositif d'assistance à la conduite conforme à l'une des revendications 1 et 2,
dans lequel les informations concernent l'état du trafic signalé le long de l'itinéraire de déplacement et/ou les conditions météorologiques signalées le long de l'itinéraire de déplacement et/ou un état déterminé du véhicule le long de l'itinéraire de déplacement et/ou des objets se trouvant le long de l'itinéraire de déplacement et/ou une régulation du trafic en vigueur le long de l'itinéraire de déplacement, et/ou la disponibilité d'offres de service de communication et d'offres de programmes radio et télévisés le long de l'itinéraire de déplacement.

4. Dispositif d'assistance à la conduite conforme à l'une des revendications 1 à 3,
comprenant :
- un dispositif de réception (130) permettant de recevoir un premier jeu de données,
- le dispositif de commande (100) étant réalisé pour permettre de générer une première partie des données à partir du premier jeu de données et pour afficher les informations correspondantes sur le dispositif d'affichage (110) le long de la représentation de l'itinéraire de déplacement.

5. Dispositif d'assistance à la conduite conforme à l'une des revendications 1 à 3,
comprenant :
- un dispositif récepteur (130) permettant de recevoir un premier jeu de données,
- un dispositif de mémoire (140) équipé d'une première mémoire (141) permettant de mettre en mémoire le premier jeu de données,
- le dispositif de commande (100) étant réalisé pour permettre de sélectionner en fonction de l'identification d'au moins un passager du véhicule, au moins une première partie du premier jeu de données et de générer à partir de la partie sélectionnée du premier jeu de données les données à afficher sur le dispositif d'affichage (110).

6. Dispositif d'assistance à la conduite conforme à l'une des revendications 1 à 5,
comprenant :
- au moins un dispositif de détection (150) permettant de déterminer au moins un état du véhicule (1),
- ce dispositif de détection (150) générant un second jeu de données en fonction de l'état du véhicule (1) déterminé,
- le dispositif de mémoire (140) comprenant une seconde mémoire (142) permettant de mettre en mémoire le second jeu de données,
- le dispositif de commande (100) étant réalisé pour pouvoir sélectionner en fonction de l'état du véhicule (1) déterminé au moins une partie du second jeu de données et pour générer à partir de la partie sélectionnée du second jeu de données les données à afficher sur le dispositif d'affichage (110).

7. Dispositif d'assistance à la conduite conforme à l'une des revendications 1 à 6, comprenant :
- un dispositif d'interface (160) permettant de relier un appareil multifonctions mobile (2) avec le dispositif d'assistance à la conduite (10),
- le dispositif de mémoire (140) comprenant une troisième mémoire (143) permettant de mettre en mémoire un troisième jeu de données et, ce troisième jeu de données étant fourni par l'appareil multifonctions mobile (2),
- le dispositif de commande (100) étant réalisé pour permettre de lire le troisième jeu de données sur l'appareil multifonctions mobile (2) et de le mettre en mémoire dans la troisième mémoire (143) du dispositif de mémoire,
- le dispositif de commande (100) étant réalisé pour permettre de sélectionner au moins une partie du troisième jeu de données en fonction de l'itinéraire de déplacement et de générer à partir de la partie sélectionnée du troisième jeu de données les données à afficher sur le dispositif d'affichage (110).

8. Dispositif d'assistance à la conduite conforme à la revendication 7, dans lequel l'appareil multifonctions mobile (2) est un Smartphone et le dispositif de commande (100) est réalisé pour permettre de lire le troisième jeu de données sur la mémoire du Smartphone pour permettre de mettre en mémoire des entrées d'un agenda du Smartphone.

9. Dispositif d'assistance à la conduite conforme à l'une des revendications 1 à 8, comprenant :
- un dispositif permettant de déterminer une position (170) pour permettre de déterminer la position du véhicule (1),
- le dispositif de mémoire (140) comprenant une quatrième mémoire et une cinquième mémoire (144, 145) pour permettre de mettre respectivement en mémoire un ensemble de quatrièmes jeux de données, les quatrièmes jeux de données comprenant respectivement la position du véhicule, un premier paramètre qui caractérise le passager du véhicule et un second paramètre qui caractérise une action du passager du véhicule sur sa position,
- une unité d'exploitation (180) pour permettre d'exploiter la quatrième mémoire (144) de sorte que le dispositif d'exploitation (180) mette en mémoire, un quatrième jeu de données dans la cinquième mémoire (145) en fonction de la fréquence de la mise en mémoire de ce quatrième jeu de données dans la quatrième mémoire.

10. Dispositif d'assistance à la conduite conforme à la revendication 9, dans lequel le dispositif de commande (100) est réalisé pour permettre de lire le quatrième jeu de données dans la cinquième mémoire (145) lorsque le dispositif de commande (100) détermine que le conducteur **caractérisé par**
le premier paramètre coïncide avec le conducteur déterminé par le dispositif d'identification (120), et que la position renfermée dans le quatrième jeu de données est située le long de l'itinéraire de déplacement du véhicule,
le dispositif de commande (100) étant réalisé pour permettre de générer en fonction du quatrième jeu de données sélectionné les données à afficher sur le dispositif d'affichage (110).

11. Dispositif d'assistance à la conduite conforme à l'une des revendications 1 à 10,
dans lequel le dispositif de commande (100) est programmable pour que le dispositif de commande (100) génère les données en fonction de la programmation.

12. Dispositif d'assistance à la conduite conforme à l'une des revendications 1 à 11,
comprenant :
- un dispositif d'entrée (180) permettant d'entrer le but du déplacement,
- le dispositif de commande (100) étant réalisé pour permettre de générer les données en fonction du but entré et d'afficher les informations correspondantes sur le dispositif d'affichage (110).

13. Véhicule comprenant un dispositif d'assistance à la conduite (10) conforme à l'une des revendications 1 à 12.
